# EUROPEAN PATENT APPLICATION

(11) **EP 2 077 633 A2**
(43) Date of publication of application: **08.07.2009**
(21) Application number: 08172933.7
(22) Date of filing: 24.12.2008
(51) Int. Cl.: H04H 60/35

(54) **Method and apparatus for processing service guide information**

(30) Priority: 26.12.2007 KR 20070137435
(71) Applicant: LG Electronics Inc., Seoul 150-721 (KR)
(72) Inventor: Moon, Kyoung Soo, Seoul 137-724 (KR); Choi, Jin Young, Seoul 137-724 (KR)
(74) Representative: Cabinet Plasseraud

(57) **Abstract**

A method and apparatus for processing service guide information is disclosed. The method includes receiving a service guide delivery information including at least one of a profile grouping criteria and a parental rating grouping criteria as grouping criteria, wherein the profile grouping criteria corresponds to criteria information for grouping service guide information required for displaying an audio or video service of the service guide information, and wherein the parental rating grouping criteria corresponds to criteria information for grouping service guide information based upon viewing rating levels; decoding the received service guide information and receiving the grouped service guide information based upon the corresponding grouping criteria, and receiving and outputting data content by using the received grouped service guide information.

## Description

The present invention relates to a method and apparatus for processing data, and more particularly, to a method and apparatus for processing service guide information through a broadcast channel and an interactive channel.

A content refers to data content or information including image, sound, and text that are provided to users through wired and/or wireless communication. Recent data contents are created by using digital method in order to be provided through various broadcast channels and interactive channels. For example, a user may download through an interactive channel, such as the Internet, a previously viewed data content provided via broadcasting and view the downloaded data content. As broadcast systems and communication systems are being integrated, a solution for providing users with the same data content from a broadcast system and a communication system is now being taken into consideration. More specifically, a solution enabling a terminal to access data content via a broadcast channel and an interactive channel is now being developed.

Accordingly, the present invention is directed to a method and apparatus for processing service guide information that substantially obviate one or more problems due to limitations and disadvantages of the

### related art.

An object of the present invention is to provide a method and apparatus for processing service guide information that can efficiently acquire service guide information.

Another object of the present invention is to provide a method and apparatus for processing service guide information that can enable a terminal to transmit and receive service guide information grouped based upon the data content.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a method for processing service guide information includes the steps of receiving a service guide delivery information including at least one grouping criteria of a profile grouping criteria and a parental rating grouping criteria, decoding the received service guide information and receiving grouped service guide information based upon the grouping criteria and outputting data content by using the received grouped service guide information,

Herein the profile grouping criteria corresponds to criteria information for grouping service guide information required for displaying an audio or video service of the service guide information, and wherein the parental rating grouping criteria corresponds to criteria information for grouping service guide information based upon viewing rating levels

The service guide information may be grouped as a basic group and an advanced group, wherein the basic group groups the service guide information required for displaying a corresponding service based upon the profile grouping criteria, and wherein the advanced group groups the service guide information that provides a service including additional information.

Among the service guide information, the basic group may include at least any one of a service fragment, an access fragment, a sessiondescription fragment, a purchaseitem fragment, a purchasedata fragment, and a purchasechannel fragment. And among the service guide information, the advanced group may include at least any one of a schedule fragment, a content fragment, a previewdata fragment, and an interactivitydata fragment.

At least one of the grouping criteria, being the profile grouping criteria and the parental rating grouping criteria, is included in a descriptor level of the service guide delivery information.

At least one of the grouping criteria, being the profile grouping criteria and the parental rating grouping criteria, is included in a fragment level of the service guide delivery information.

In another aspect of the present invention, a apparatus for processing service guide information includes a receiving unit, a system decoder, a service guide information controller, and a display unit. The receiving unit receives a service guide delivery descriptor including at least one grouping criteria of a profile grouping criteria and a parental rating grouping criteria, and also receives service guide information grouped based upon the corresponding grouping criteria. Herein the profile grouping criteria corresponds to criteria information for grouping service guide information required for displaying an audio or video service of the service guide information, and wherein the parental rating grouping criteria corresponds to criteria information for grouping service guide information based upon viewing rating levels.

The system decoder decodes the received service guide delivery descriptor. The service guide information controller control the grouped service guide information to be displayed, when the service guide information grouped based upon the corresponding grouping criteria is received. And, the display unit displays the grouped service guide information.

Furthermore, the system decoder may include an internet protocol (IP) decapsulator, a user datagram protocol (UDP), a file delivery over unidirectional transport protocol (FLUTE) decoder, and a parser. The IP decapsulator decapsulates an IP datagram including the service guide information. The UDP decoder decodes the decapsulated data based upon the UDP. The FLUTE decoder decodes the UDP-decoded data based upon the FLUTE. And, the parser parses the FLUTE-decoded data.

It is to be understood that both the foregoing general description and the following detailed description of the present invention are exemplary and explanatory and are intended to provide further explanation of the invention as claimed.

The accompanying drawings, which are included to provide a further understanding of the invention and are incorporated in and constitute a part of this application, illustrate embodiment(s) of the invention and together with the description serve to explain the principle of the invention. In the drawings:

FIG. 1 illustrates an exemplary structure of service guide information;

FIG. 2 illustrates part of an exemplary structure of a service guide delivery descriptor;

FIG. 3 illustrates an exemplary structure of a service guide delivery descriptor describing service guide information identified based upon grouping criteria of a fragment level;

FIG. 4 illustrates an exemplary structure of a descriptor including service guide delivery information, when grouping contents in a descriptor entry level;

FIG. 5 illustrates an exemplary structure of a service guide delivery information, when grouping service guide information based upon a grouping criteria (profileCriteria) in a fragment level;

FIG. 6 illustrates a service guide delivery information expressed in the form of an XML schema;

FIG. 7 illustrates an exemplary XML schema of a service guide delivery information, when grouping service guide information based upon a grouping criteria (profileCriteria) in a fragment level;

FIG. 8 illustrates a transmitting system transmitting service guide information according to an embodiment of the present invention;

FIG. 9 illustrates a modulator/encoder shown in FIG. 8;

FIG. 10 illustrates an exemplary signal positioning based upon a frame created by a frame generator shown in FIG. 9;

FIG. 11 illustrates an example of broadcast program, contents, and data being transmitted through a channel;

FIG. 12 and FIG. 13 respectively illustrate receiving systems receiving service guide information according to the present invention;

FIG. 14 illustrates an example of service guide information or a protocol stack to which service guide information is transmitted; and

FIG. 15 illustrates a method for processing service guide information according to an embodiment of the present invention.

Reference will now be made in detail to the preferred embodiments of the present invention, examples of which are illustrated in the accompanying drawings. Wherever possible, the same reference numbers will be used throughout the drawings to refer to the same or like parts.

Hereinafter, the service guide information will indicate information associated with a service or data content provided by a service and content provider. The service guide information includes information for describing, accessing, and purchasing the service or data content provided by the service and content provider. The service guide information may be transmitted (or delivered) to a terminal owned by the user through a broadcast channel or an interactive channel. The interactive channel indicates a channel through which two-way communication is performed, and the broadcast channel indicates a one-way communication channel that does not designate a user in a multicast. For the user, the service guide information may correspond to entry information that is provided with a service or data content.

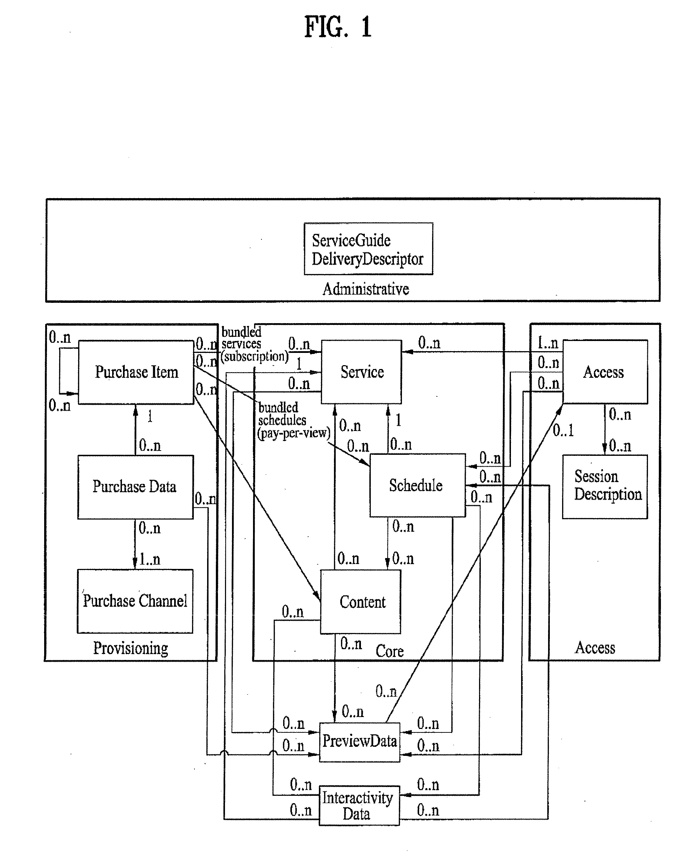

FIG. 1 illustrates an exemplary structure of service guide information. The exemplary service guide information will now be described in detail with reference to FIG. 1. The service guide information may include 4 types of structure information as shown in FIG. 1. Each structure information may include information of a lower level. Hereinafter, the lower level will be referred to as a fragment level. The arrows shown in FIG. 1 respectively indicate reference directions between each information. For example, when an arrow points from fragment A to fragment B, this indicates that fragment A refers to fragment B. More specifically, referring to FIG. 1, an access fragment refers to a service fragment. And, the numbers marked on the arrows corresponding to each fragment represent the number of reference information, which may be referred to by a respective fragment. Herein, the numbers "0, ..., n" indicate that 0 to *n* number of reference information exist (wherein n is an integer). Furthermore, "1, ..." indicates that at least one or more reference information exist.

Referring to FIG. 1, an administrative structure information may include a descriptor (hereinafter referred to as the service guide delivery descriptor (SGDD)), which describes delivery information that nay be delivered to a terminal. Accordingly, the terminal may be able to swiftly acquire a grouped fragment or meta data from the descriptor information.

A provisioning structure information includes each of a PurchaseItem fragment, a PurchaseData fragment, and a PurchaseChannel fragment. The referential relation between the fragments included in the provisioning structure information is illustrated in FIG. 1.

The PurchaseItem fragment includes information on a service bundle, which corresponds to more than one service, on the purchase of one or more content item, on free-of-charge supply, and on a subscription request. The PurchaseData fragment includes price information on the corresponding purchase item. The PurchaseChannel fragment may include information on an accessing entity with respect to one or more service content item.

A core structure information may include a service fragment, a schedule fragment, and a content fragment. The service fragment may correspond to an information unit describing a content item. The schedule fragment may correspond to an information unit having the schedule of a content item defined therein, the schedule of the content item corresponding to a time frame during which the content item can be used. The content fragment corresponds to an information unit including detailed information on each content.

An access structure information may include an access fragment and a session description fragment. Herein, the access fragment corresponds to an information unit including information on how a service can be accessed. And, the session description fragment corresponds to an information unit providing session information for accessing a service or content item.

Finally, the service guide information may include a PreviewData fragment and an InteractivityData fragment. The PreviewData fragment corresponds to an information unit including information that can display an abstract of the service or content to the user. And, the InteractivityData fragment corresponds to an information unit including information that is used to provide an interactive service to the user.

The service guide information provides information on usable services to the user. When the user selects a service based upon the service guide information received by the terminal, the terminal may select a flow that can receive a service or content. Detailed individual information on the service guide information delivered to the terminal may be transmitted (or delivered) by constant data units. Hereinafter, the transmission data unit (or transmission unit) will be referred to as a service guide delivery unit (SGDU). Therefore, each of the above-described fragment information may be divided and transmitted to each of the one or multiple service guide delivery units. The terminal first receives a descriptor including the transmission information of the service guide information (e.g., a service guide delivery descriptor (SGDD)).

The terminal may receive a descriptor including the transmission information of the service guide information through a first channel. Hereinafter, the first channel through which the terminal receives the descriptor including the transmission information of the service guide information will be referred to as an announcement channel, for simplicity.

The service guide delivery descriptor (SGDD) includes entry information that can obtain a service guide delivery unit, which is the transmission data unit of the service guide information. The terminal may either use the entry information so as to receive a service guide delivery unit, which is the detailed data of the service guide information, through a second channel, or access the second channel so as to receive the data configuring the service guide information. Hereinafter, the second channel through which the terminal receives the data configuring the service guide information will be referred to as a delivery channel, for simplicity. In the description of the present invention, the terms "announcement channel" and "delivery channel" will be used for the purpose of conceptually differentiating the channel through which the service guide delivery descriptor (SGDD) is transmitted from the channel through which the service guide delivery unit (SGDU).

The terminal may obtain transmission information (*e*.*g*., SGDD) of the service guide information from a broadcast channel or an interactive channel. A bearer bearing the above-described service guide delivery descriptor (SGDD) may vary depending upon the broadcast and communication system. The terminal may receive and access a service and content from one or more service guide delivery descriptors.

The fragments of the service guide information may be grouped in group units, wherein a plurality of fragments is grouped. And, information one the group-unit fragments may be described in the service guide delivery descriptor. The service guide delivery descriptor includes grouping information of each fragment and also includes grouping criteria information.

The service guide information units may be grouped to two different levels. Herein, multiple service guide information units may be grouped to group units (hereinafter referred to as DescriptorEntry level grouping). Alternatively, fragments may also be grouped to group units (hereinafter referred to as Fragment level grouping). When service guide information is grouped in accordance with each level, the grouping criteria information may be included in the service guide transmission information, such as the service guide delivery descriptor.

When grouping is performed as described above, the service guide information may be more easily acquired, since the service guide information can be acquired in the above-described group units. Hereinafter, based upon the grouping concept of the service guide information, an example of including and transmitting the grouping criteria information in the transmission information of the service guide information will be described.

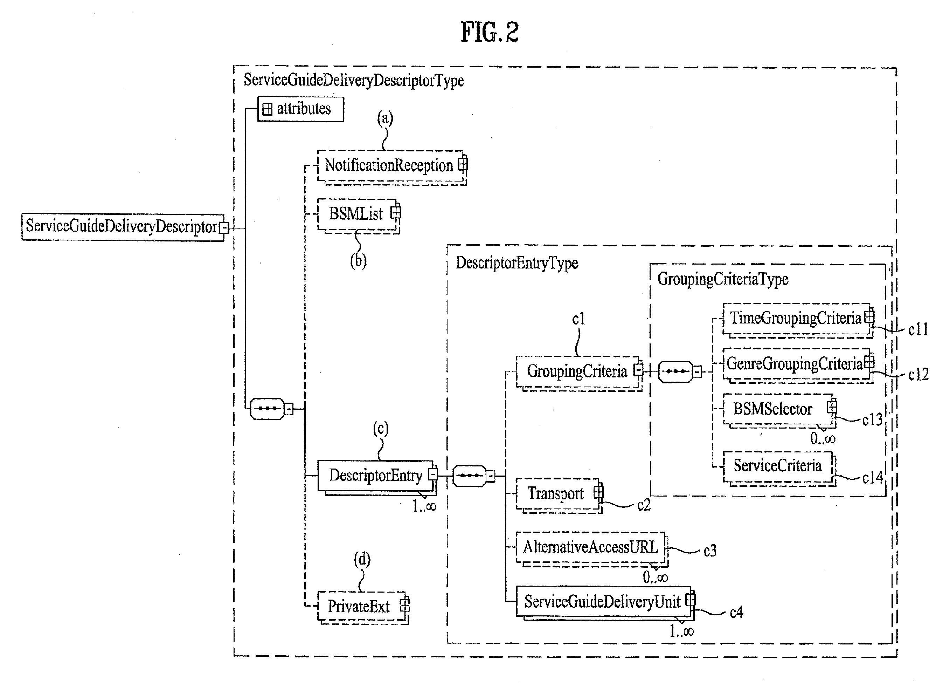

FIG. 2 illustrates part of an exemplary structure of a service guide delivery descriptor. The service guide delivery descriptor may be defined as a type information having the properties of an extensible markup language (XML). The descriptor describing the transmission information of the service guide information, as shown in FIG. 1, includes information on receiving a notification message (NotificationReception) (a), information on a list of providers providing services (BSMList) (b), entry information of the service guide information (DescriptorEntry) (c), and extension information describing a specific application (PrivateExt) (d). The DescriptorEntry (c), which corresponds to information that may be mapped to a specific session, may include an element describing entry information that can receive the service guide information.

The DescriptorEntry (c) of the service guide information includes grouping criteria information of the service guide information (GroupingCriteria) (c1), point information of a transmission session transmitting a service guide fragment (Transport) (c2), link information enabling a service guide delivery unit to be acquired through an interactive channel (AlternativeAccessURL) (c3), and a service guide delivery unit grouped based upon the grouping criteria information (ServiceGuideDeliveryUnit) (c4). Herein, each individual ServiceGuideDeliveryUnit (c4) being transmitted through the delivery channel is grouped in accordance with the GroupingCriteria (c1).

A transmission point of the Transport (c2) may be defined, when the service guide delivery unit is transmitted through a broadcast channel, and a transmission point of the AlternativeAccessURL (c3) may be defined, when the service guide delivery unit is transmitted through an interactive channel.

Hereinafter, the grouping criteria information of the service guide information (GroupingCriteria) will be described in detail. The service guide delivery unit, which is the transmission unit of the service guide information, may be grouped to a specific unit and then transmitted. For example, the service guide delivery unit may be grouped at the descriptor entry level, or may be grouped at the fragment level, wherein grouping is performed in fragment units. When grouping is performed in each level, the grouping criteria information may be included in the service guide delivery descriptor.

The grouping criteria information at the descriptor entry level will now be described in detail. The grouping criteria information of the service guide information at the descriptor entry level includes TimeGroupingCriteria (c11), GenreGroupingCriteria (c12), BSMSelector (c13), and ServiceCriteria (c14). More specifically, herein, the TimeGroupingCriteria (c11) corresponds to time grouping criteria information indicating that the service guide information (or service guide delivery unit (SGDU)) is grouped based upon a time-unit criteria. The GenreGroupingCriteria (c12) corresponds to genre grouping criteria information indicating that the service guide information (or service guide delivery unit (SGDU)) is grouped based upon a genre-unit criteria. The BSMSelector (c13) indicates that the service guide information (or service guide delivery unit (SGDU)) is grouped based upon the service provider associated with the service guide information. And, the ServiceCriteria (c14) indicates that the service guide information (or service guide delivery unit (SGDU)) is grouped based upon the related service.

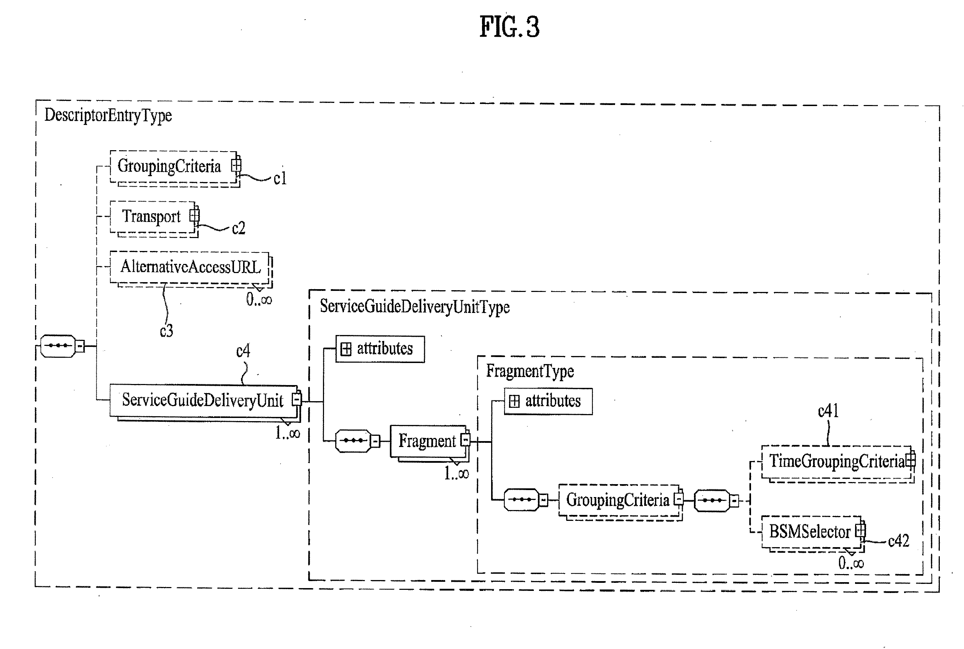

FIG. 3 illustrates an exemplary structure of a service guide delivery descriptor describing service guide information identified based upon grouping criteria of a fragment level. When the service guide information (i.e., service guide delivery unit (SGDU)) is grouped, the service guide delivery unit (SGDU) (c4) may include at least one fragment element, which describes the grouping criteria of the corresponding service guide delivery unit (SGDU). The fragment element shown in FIG. 3 indicates that the fragments of the service guide information have been grouped based upon a TimeGroupingCriteria (c41) and a BSMSelector (c42). According to the example shown in FIG. 3, the service guide information is grouped based upon fragment-level grouping criteria information, which is included in the service guide delivery unit (SGDU).

As described above, when the service guide delivery units are transmitted to the terminal, the service guide delivery units may be grouped based upon DescriptorEntry-level or fragment-level grouping criteria information. However, when using the above-described criteria, it is difficult to swiftly output only the service guide information that is required for displaying the service. In this case, although the user wishes to quickly select the wanted service through the service guide information, excessive time may be consumed for equally receiving the service guide information of non-selected services. Furthermore, the user is unable to select a service guide information respective of a viewing rating criteria of a specific data content. More specifically, when the user is provided with service guide information received based upon the above-described criteria, a large amount of time may be consumed for receiving service guide information of a service that corresponds to the viewing rating level non-accessible by the user.

The disclosed service guide information may be grouped based upon priority levels determined by service guide information that is required for quickly providing the selected service and by the non-relevant service guide information. Alternatively, the service guide information may also be grouped based upon viewing rating levels of respective services. More specifically, when grouping the service guide delivery units based upon the above-described grouping criteria, which correspond to priority levels, the terminal may first receive the service guide delivery unit with a higher priority level than the service guide delivery units having lower priority levels, thereby swiftly providing the received service guide information unit to the user. For example, the terminal may first receive the service guide information required for video/audio output (*e*.*g*., information on the service structure or information on purchasing), thereby outputting the received service guide information to the user. Furthermore, when the service guide delivery units are grouped based upon viewing rating levels, the terminal may first receive the service guide delivery units corresponding to the predetermined viewing rating level, thereby providing the received service guide information to the user. Hereinafter, an example of the service guide delivery descriptor corresponding to the above-described grouping criteria will now be described in detail.

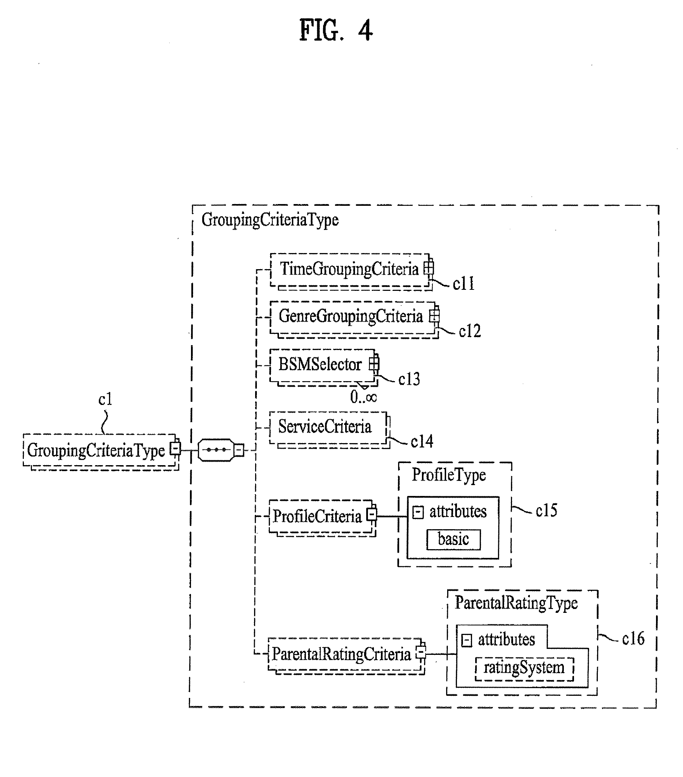

FIG. 4 illustrates an exemplary structure of a descriptor including service guide delivery information, when grouping contents in a descriptor entry level. In the exemplary grouping criteria information shown in FIG. 4, the TimeGroupingCriteria (c11), GenreGroupingCriteria (c12), BSMSelector (c13), and ServiceCriteria (c14) have already been described in FIG. 2. Referring to FIG. 4, the service guide information further includes a grouping criteria information grouping service guide delivery units so that the user can quickly select a data content at a descriptor entry level (hereinafter referred to as ProfileCriteria) (c15), and a grouping criteria information grouping service guide delivery units based upon viewing rating levels (hereinafter referred to as ParentalRatingCriteria) (c16).

When the terminal requires service to be swiftly provided, as when the terminal has been initially booted (OR operated), the ProfileCriteria corresponds to grouping criteria that groups service guide delivery units required for outputting a specific service, which enables the data content being provided by the corresponding service (e.g., video data and audio data of a specific channel) to be quickly outputted to the user. Furthermore, apart from the service guide delivery units associated with the service output, other service guide delivery units associated with other additional information may also be grouped based upon the above-described ProfileCriteria.

According to the above-described ProfileCriteria, the service guide delivery units may be grouped based upon two different criteria. Firstly, the service guide delivery units may be grouped based upon a grouping criteria information including only the service guide information directly associated with the service output (hereinafter referred to as a basic grouping criteria and a basic group), so as to enable the terminal to swiftly output the corresponding service. According to the basic grouping criteria, service guide delivery units corresponding to service guide information (*i*.*e*., fragments) on service, access, session description, purchase item, purchase data, and purchase channel may be grouped, so as to be primarily transmitted to the terminal.

Secondly, the service guide delivery units may be grouped based upon a grouping criteria information including service guide information enabling the terminal to acquire additional information other than service output (hereinafter referred to as an advanced grouping criteria and an advanced group). Herein, apart from the basic audio/video data, the additional information may include multi audio data corresponding to multi-channel television sound(MTS), multi text data, program data indicating a program schedule, and interactive data. According to the advanced grouping criteria, schedule, content, PreviewData, and InteractivityData fragments (shown in FIG. 1) may be grouped. Each group corresponding to the respective ProfileCriteria information (i.e., the basic group and the advanced group described in the example of FIG. 4) may vary depending upon the service provider configuring and transmitted the service guide information.

The user may select any one of the service guide information grouped based upon ProfileCriteria information from the service guide delivery descriptor. The terminal may primarily receive the service guide information associated with the service output based upon each grouped service guide information, thereby outputting the received service guide information. Furthermore, the user may select the primarily outputted service guide information, thereby being quickly provided with the selected service.

The service guide information may also be grouped based upon the ParentalRatingCriteria (c16). When the service guide information is grouped based upon the ParentalRatingCriteria, the service guide information is grouped according to a viewing rating level and then transmitted. The terminal may receive service guide delivery units or fragments grouped based upon viewing rating levels from the service guide delivery descriptor (SGDD). Accordingly, the user may access, purchase, and receive data contents corresponding to the predetermined viewing rating levels from the service guide information, which is grouped based upon the viewing rating levels. Since the viewing rating level may vary depending upon country or data content, detailed and specified viewing rating levels may vary depending upon a rating system, which decides the viewing rating levels.

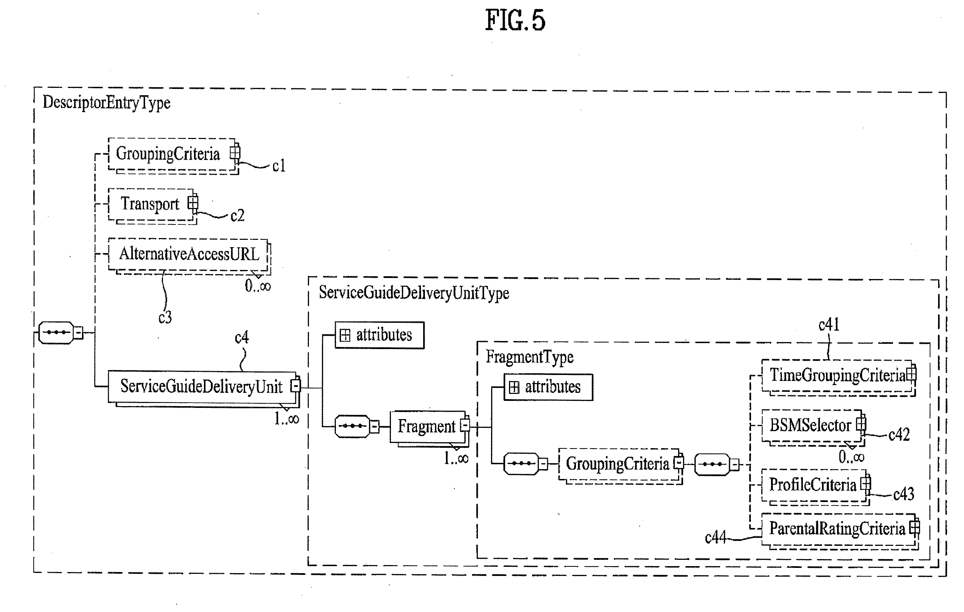

FIG. 5 illustrates an exemplary element indicating grouping criteria of a service guide delivery descriptor, when service guide information is grouped based upon the ProfileCriteria (c15) and also based upon the ParentalRatingCriteria (c16) in the fragment level. The grouping criteria information of the fragments shown in the example of FIG. 5 includes GroupingCriteria (c1), Transport (c2), AlternativeAccessURL (c3), and ServiceGuideDeliveryUnit (c4), which are also shown in FIG. 3. The ServiceGuideDeliveryUnit may be grouped in the fragment level. In the example shown in FIG. 5, the ServiceGuideDeliveryUnit includes TimeGroupingCriteria (c41) and BSMSelector (c42), which also correspond to the grouping criteria shown in FIG. 3, and also includes the above-described ProfileCriteria (c43) and ParentalRatingCriteria (c44). Accordingly, the fragments of the service guide delivery unit (ServiceGuideDeliveryUnit) may be grouped based upon the above-described ProfileCriteria and ParentalRatingCriteria.

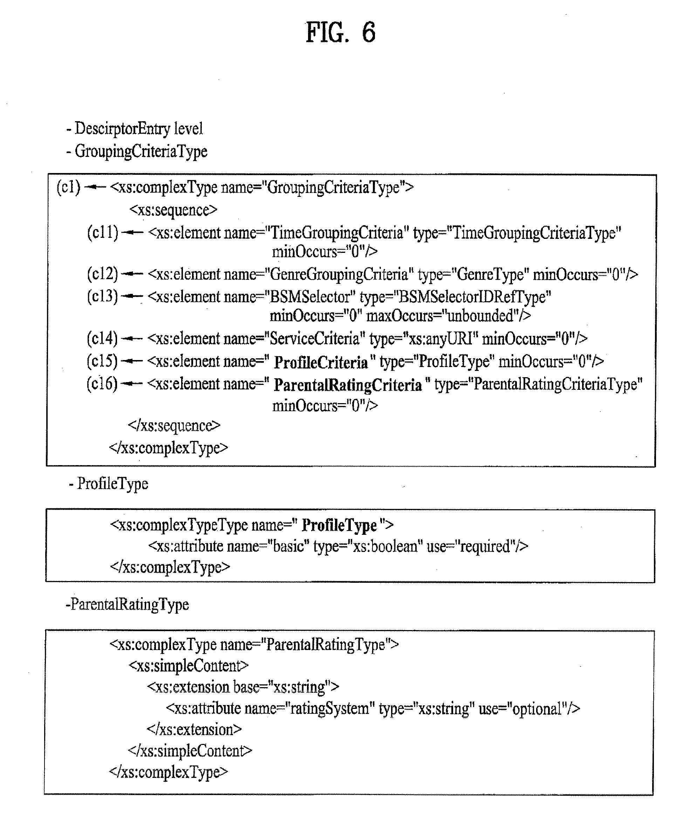

FIG. 6 illustrates the grouping criteria information of the service guide delivery descriptor, shown in FIG. 4, expressed in the form of an XML schema. The service guide delivery descriptor may include grouping criteria grouping the service guide delivery units in the descriptor entry level. The GroupingCriteria (c1) grouping the service guide delivery units includes the TimeGroupingCriteria (c11), the GenreGroupingCriteria (c12), the BSMSelector (c13), and the ServiceCriteria (c14) shown in FIG. 4. Additionally, GroupingCriteria (c1) grouping the service guide delivery units may include at least any one of the ProfileCriteria (c15) and the ParentalRatingCriteria (c16). FIG. 6 illustrates an example of the GroupingCriteria (c1) including both the ProfileCriteria (c15) and the ParentalRatingCriteria (c16).

The ProfileCriteria (c15) may have an attribute defined as "basic" (ref. ProfileType). For example, if the attribute defined as basic is "true", this indicates that, as described above, the service guide delivery units are grouped to include only the service guide information required for content output. Conversely, if the attribute defined as basic is "false", this indicates that, the service guide delivery units are grouped based upon the advanced grouping criteria, so as to provide service guide information on the additional information. The ParentalRatingCriteria (c16) may have an attribute defined as "RatingSystem" (*ref*. ParentalRatingType). Herein, the ParentalRatingCriteria (c16) may also be separately defined within the service, content, and PurchaseItem fragments. Furthermore, the ParentalRatingCriteria (c16) may also be defined as the GroupingCriteria of service guide delivery units, as shown in FIG. 6.

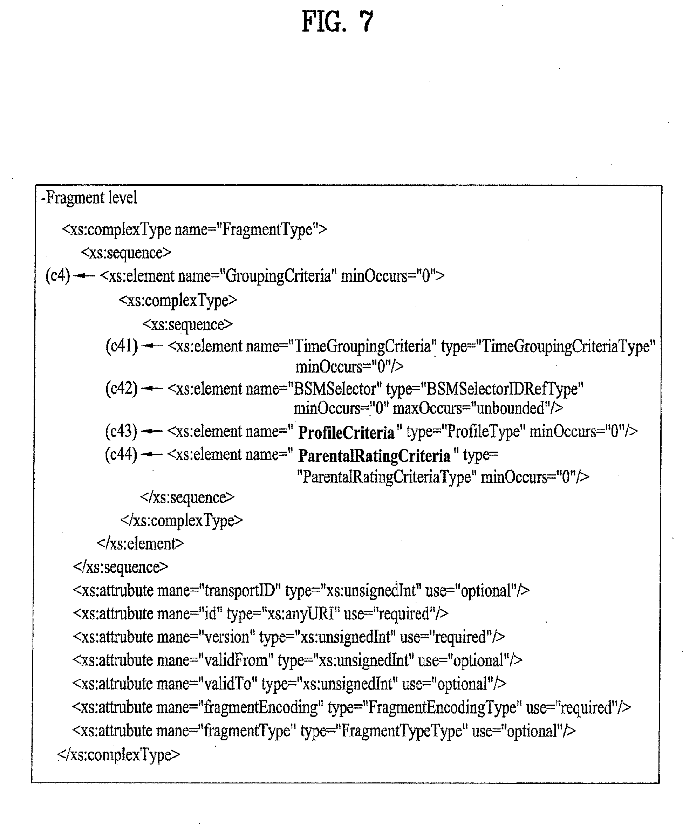

FIG. 7 illustrates an exemplary XML schema of a grouping criteria of fragments included in the service guide delivery descriptor, when service guide information is grouped based upon the ProfileCriteria (c15) and also based upon the ParentalRatingCriteria (c16) in the fragment level, as shown in FIG. 5. The service guide delivery units (SGDUs) may be grouped in fragment units. The element indicating the grouping criteria includes an element (c41) indicating the TimeGroupingCriteria and an element (c42) indicating the BSMSelector. The element indicating the grouping criteria may also include an element (c43) indicating the GroupingCriteria according to the ProfileCriteria and an element (c44) indicating the GroupingCriteria according to the ParentalRatingCriteria. The fragments of the service guide delivery unit may be grouped based upon the above-described ProfileCriteria and/or ParentalRatingCriteria. The service guide delivery descriptor (SGDD) may have the GroupingCriteria of each fragment. The formats of the ProfileCriteria (c15) and the ParentalRatingCriteria (c16), which correspond to the GroupingCriteria of each fragment, have already been described with reference to FIG. 6.

A digital broadcast system transmitting and receiving the above-described service guide information will now be described in detail. As described above, the system may refer to a service guide delivery descriptor (SGDD), which is received by a terminal, so as to receive the service guide information. Herein, various types of systems may be used as the bearer bearing (or delivering) the service guide information. In the description of the present invention, a broadcast system will be proposed as the bearer of the service guide information. Accordingly, this is to facilitate the understanding of the delivery process, even when the process is used in a different embodiment to transmit or deliver service guide information and the respective service guide delivery descriptor of a different broadcast and/or communication system.

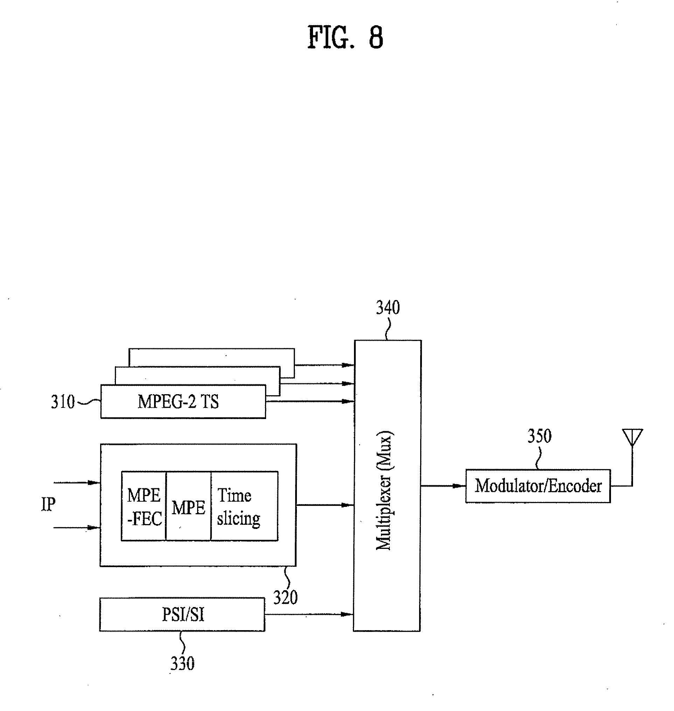

FIG. 8 illustrates a transmitting system transmitting service information according to an embodiment of the present invention. A transmitting system for transmitting service guide information according to an embodiment of the present invention will be described with reference to FIG. 8. In the example shown in FIG. 8, it is assumed that the service guide information is transmitted (or delivered) through a broadcast signal.

The digital broadcast transmitting system shown in FIG. 8 includes an encoding unit 310, 320, and 330, a multiplexer 340, and a modulator/encoder 350. The encoding unit includes a first encoder 310, a second encoder 320, and a third encoder 330. The first encoder 310 may encode audio, video, and data contents (e.g., MPEG-2 transport streams) based upon a transmission/reception protocol.

The second encoder 320 may encode data including service guide information in an IP datagram format. The IP datagram refers to a signal processing format sending a signal to an internet protocol (IP) packet. Herein, the IP datagram includes a header including an IP address, and a data container transmitting information. In the packet-unit IP datagram, the data container may include video data, audio data, and service guide information data. More specifically, the example shown in FIG. 8 may perform an internet protocol (IP) datacasting method in order to transmit data. Herein, the IP datacasting method divides and compresses a video signal, an audio signal, and a data signal in packet units, thereby outputting the compressed data. The IP data are encapsulated by multi-protocol encapsulation (MPE), thereby being embedded to the MPEG-2 transport stream (TS). Herein, forward error correction (FEC) may be added to the MPE method, so as to process data with multi-protocol encapsulation-forward error correction (MPE-FEC). By positioning a transmission signal processed with MPE-FEC, a carrier-to-noise (CN) ratio of the transmission signal may be enhanced. MPE-FEC data including FEC or MPE data not including FEC may be included in the IP datagram format transmission data.

The second encoder 320 may encode the service guide information to an IP datagram format. The second encoder 320 may encapsulate the IP datagram included in the service guide information to MPE and then multiplex the processed data using a time-slicing method, so as to reduce power consumption. The multiplexed signal is converted to a transport stream, thereby being multiplexed with an MPEG-2 TS packet, which carries a video or audio signal. The service guide information is divided into service guide delivery units (SGDUs) so as to be included in an IP datagram and an MPEG-2 TS, thereby being transmitted.

The third encoder 330 may encode packets encoded by the first encoder 310 or the second encoder 320 (*e.g*., multiplexing information of stream packets associated with a program or service). The multiplexing information includes table information on program specific information/service information (PSI/SI). The table information encoded by the third encoder 330 may include packet identification (PID) including the IP datagram being encoded by the second encoder 320 and IP/MAC notification table (INT) having mapping information of an IP address. The third encoder 330 may encode INT information, which can acquire transmission information of the service guide information (or service guide delivery descriptor (SGDD)). Furthermore, the transmission information of the service guide information (or SGDD) acquired from the service guide entry information may include GroupingCriteria for a service guide delivery unit in a descriptor entry level or a fragment level, as shown in FIG. 4 to FIG. 7.

The multiplexer 340 multiplexes each of the transport packets outputted from the first encoder 310, the second encoder 320, and the third encoder 330, thereby outputting the multiplexed data. Finally, the modulator/encoder 350 modulates and encodes the multiplexed signal. When the multiplexer 340 multiplexes the packet data encoded by the first encoder 310, the second encoder 320, and the third encoder 330 and outputs the multiplexed packet data, the modulator/encoder 350 modulates the multiplexed signal and encodes the modulated signal. Thereafter, the modulator/encoder 350 may transmit the modulated signal as a radio frequency (RF) signal. The modulator/encoder 350 may adopt various modulation and encoding methods in accordance with a wide range of broadcast systems. For example, ATSC type or ISDM-T type transmission methods may be used based upon DMB-type, DVB-H type, and VSB-type modulation methods.

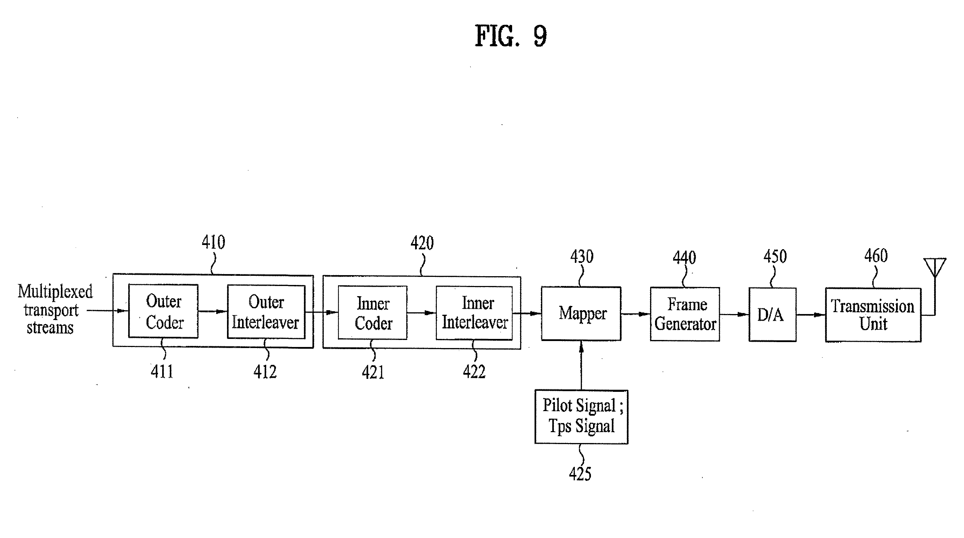

FIG. 9 illustrates a modulator/encoder shown in FIG. 8. Referring to FIG. 9, the modulator/encoder of FIG. 8 may use modulation and encoding methods, such as a digital video broadcasting-terrestrial/handheld (DVB-T/H) method. A first encoder 410 includes an outer coder 411 and an outer interleaver 412. In order to enhance the transmission performance for transmitting the multiplexed signal, the first encoder 410 may encode and interleave each set of the multiplexed data. For example, the first encoder 410 may use a Reed-Solomon (RS) coding method for the outer coding process and a convolutional interleaving method for the interleaving process.

A second encoder 420 includes an inner coder 421 and an inner interleaver 422. The inner coder 421 and the inner interleaver 422 performs coding and interleaving processes once again on the signal that is to be transmitted, as preparation for any possible occurrence of errors in the transmission signal. The inner coder 421 may encode the transmission signal in accordance with a punctured convolution code. And, for the interleaving method, the inner interleaver 422 may adopt a native or in-depth interleaving method in accordance with the use of a memory in a 2k, 4k, and 8k transmission mode. A mapper 430 takes into consideration a pilot signal, generated based upon the transmission mode, and a transmission parameter signal (TPS), which are generated by a system signal generator 425, thereby mapping the transmission signal in accordance with a 16QAM mode, a 64QAM mode, and a QPSK mode.

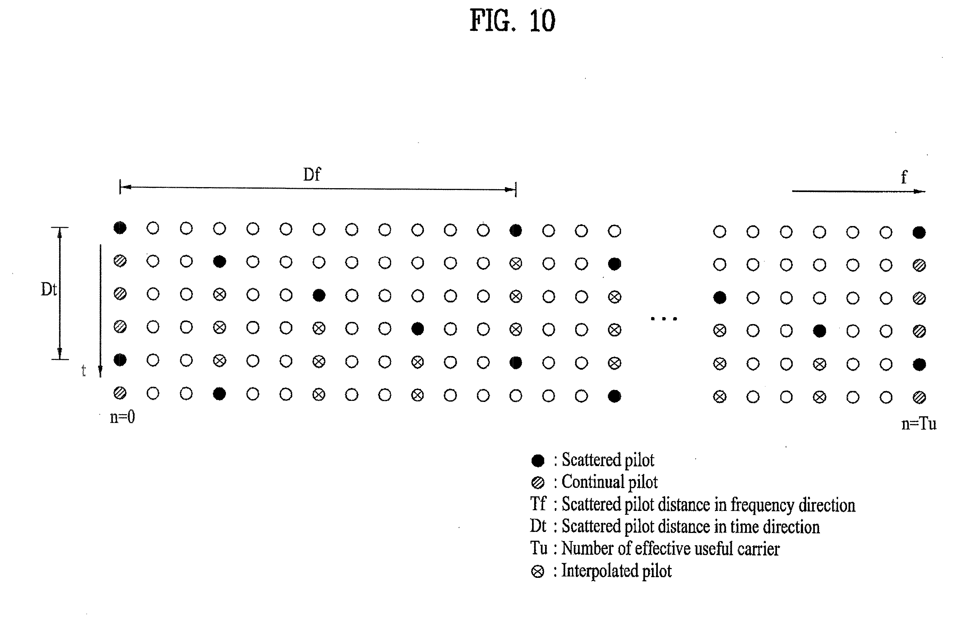

A frame generator 440 aligns (or positions) the mapped signal to a frame, thereby modulating the frame using an orthogonal frequency division multiplexing (OFDM) method. The frame generator 440 generates a frame having a protection section inserted in a data section, which includes the modulated signal. Each frame includes 68 OFDM symbols, and 4 frames may be grouped to form a super frame. For example, when the transmission mode is 8k, one symbol includes 6817 carriers. And, when the transmission mode is 2k, one symbol includes 1705 carriers. The protection section corresponds to a cyclic continuation copying the data of the data section. Herein, the length of the protection section may vary depending upon the transmission mode. Each of the OFDM frames includes a scattered pilot signal, a continual pilot signal, and a TPS carrier. An example of a signal frame generated by the frame generator of FIG. 9 will be described with reference to FIG. 10.

A digital-to-analog converter 450 converts the digital type broadcast signal, which includes a protection section and a data section, to an analog signal. And, a transmitting unit 460 may transmit the analog signal converted by the digital-to-analog converter 450 as an RF signal. Therefore, the encoded service guide information may be transmitted in accordance with the example shown in the transmitting system of FIG. 9.

FIG. 10 illustrates an exemplary signal positioning based upon a frame created by a frame generator shown in FIG. 9. Referring to FIG. 10, Tu indicates the number of effective useful carrier wave frequencies, Dt represents a distance between scattered pilots within the time axis (or direction), and Df indicates a distance between scattered pilots within a frequency axis (or direction). In the frequency domain, the distance between the scattered pilots (Df) decides a delay range of an estimatable ghost. FIG. 10 indicates the signal generated from the frame generator to a position of a pilot that is to be interpolated.

Therefore, when receiving a signal positioned as described above, time interpolation is performed at the pilot position, thereby positioning the symbol so that a pilot pattern is formed at a cycle of 4 inputted symbols. More specifically, by positioning the same scattered pilot signal in an initially inputted symbol point (t=1) and a symbol inputted at a point where t=5, the terminal receiving the signal may perform time interpolation from the position of the scattered pilot signal on symbol received at points t=2, 3, and 4. Additionally, since the symbol inputted at t=6 has the same scattered pilot pattern as the symbol inputted at t=2, the terminal receiving the signal may perform time interpolation of signals of t=3, 4, and 5, within a scattered pilot position of the symbol inputted at t=6 and the symbol inputted at t=2.

Furthermore, during signal reception, when time interpolation is performed after a symbol is received at t=7 using the above described method, scattered pilot signals are positioned at each 4 subcarrier wave positions for the symbol inputted at t=4. Therefore, the distance between the scattered pilot signals in the frequency domain of the symbol inputted at t=7 is reduced to 1/4 of the distance between the initial scattered pilot signals. And, the symbol inputted at t=4 is set-up to have a pattern positioning the scattered pilot signals for each set of 4 sub-carriers. Accordingly, the terminal receiving the signals may be able to process the signals just like when a larger number of pilot signals is positioned in a symbol. Therefore, when the continual pilot signal and the scattered pilot signal are used to transmit a signal, a channel may be adaptively compensated based upon a receiving channel status during signal reception.

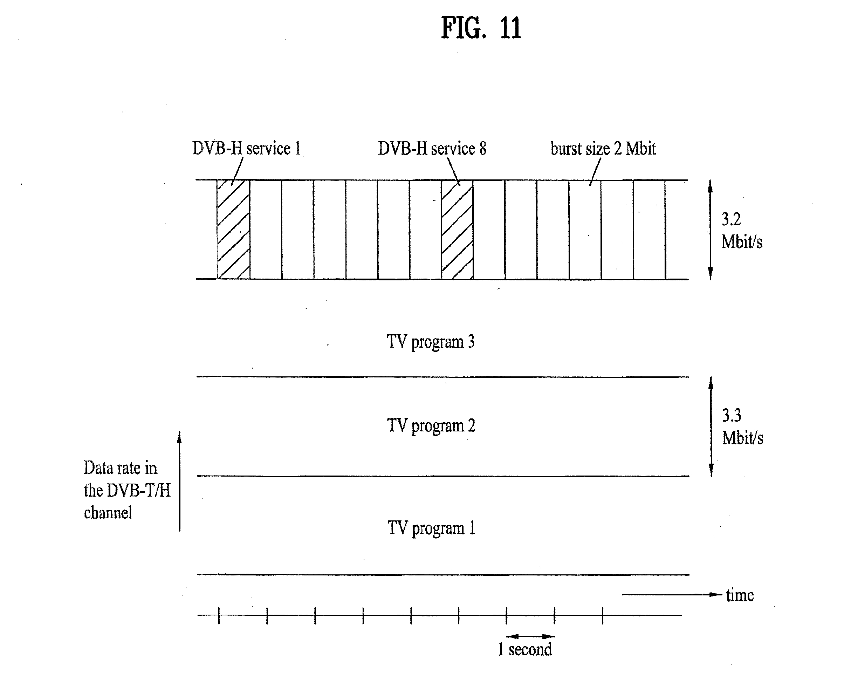

FIG. 11 illustrates an example of broadcast program, contents, and data being transmitted through a channel. In the transmission system shown in FIG. 8 and FIG. 9, a time-slicing method is adopted in a DVB-H system, thereby enabling a service that can be transmitted through a common channel of the DVB-T and DVB-H systems to be transmitted. A program may be transmitted depending upon the channel corresponding to each of the DVB-T system and the DVB-H system. And, when using the DVB-H system, each service may be time-division multiplexed using the time-slicing method and, then, transmitted. Data content including video/audio data and service guide information are included in an IP datagram of the DVB-H system so as to be converted to MPE or MPE-FEC, thereby being transmitted as an MPEG2-TS embedded with MPE or MPE-FEC.

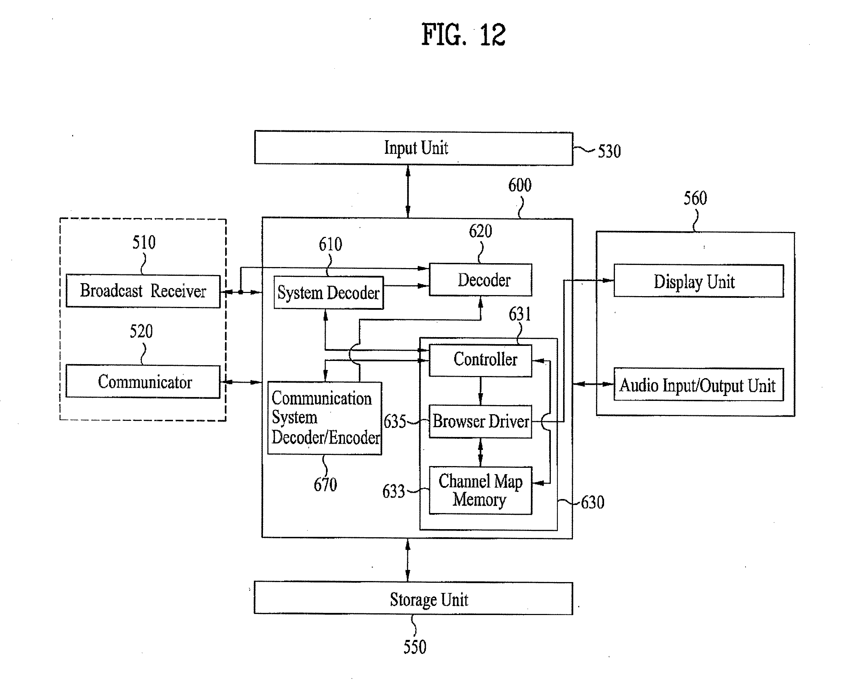

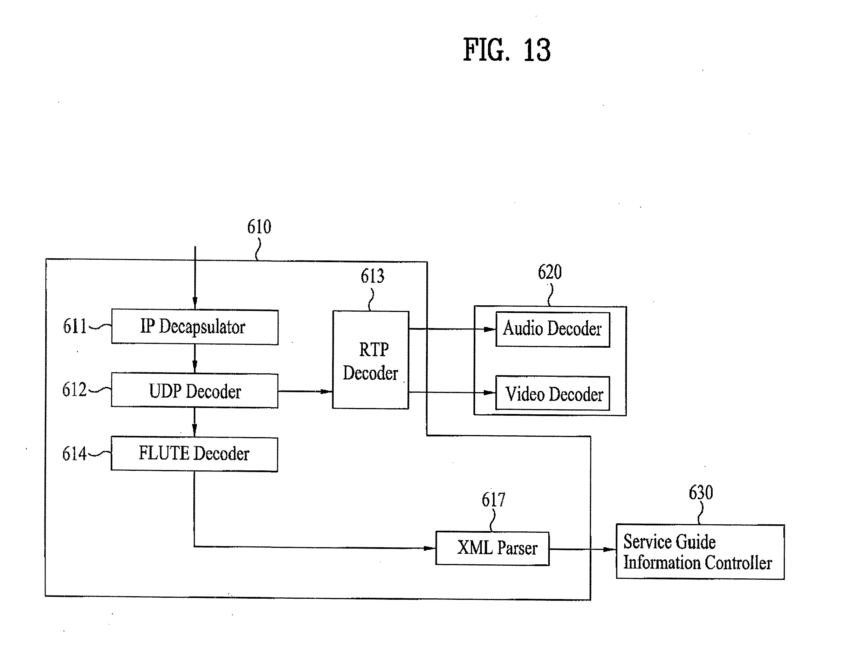

FIG. 12 and FIG. 13 respectively illustrate receiving systems receiving service guide information according to the present invention. Referring to FIG. 12 and FIG. 13, the apparatus for processing service guide information will now be described in detail. The apparatus for processing service guide information includes a receiving unit, an input unit 530, a storage unit 550, a display unit 560, and a control unit 600. The receiving unit may include a broadcast receiver 510 and a communicator 520. The broadcast receiver 510 receives signals through a broadcast channel, and the communicator 520 receives signals through an interactive channel and also transmits signals to the interactive channel. For example, a channel that is in interaction with the communicator 520 may correspond to a wired/wireless channel capable of two-way data communication.

The broadcast receiver 510 receives a broadcast signal, demodulates the received signal, and outputs the demodulated signal. Herein, the broadcast receiver 510 may include a tuner for selecting a broadcast signal that is received by a DVB-H mode, and a demodulator demodulating the DVB-H type broadcast signal using the OFDM method. The broadcast signal received by the broadcast receiver 510 includes service guide information or a service guide delivery descriptor (SGDD). Herein, the service guide delivery descriptor (SGDD) includes GroupingCriteria of the service guide delivery descriptor (SGDD), as shown in FIG. 4 to FIG. 7. And, a service guide delivery unit received based upon the service guide delivery descriptor may be grouped based upon the GroupingCriteria of the service guide information and, then, received. The service guide delivery units may be received based upon the ProfileCriteria and the ParentalRatingCriteria of the service guide delivery descriptor (SGDD).

The communicator 520 may transmit and receive signals through an interactive channel capable of two-way communication. When receiving a broadcast signal through the interactive channel, the communicator 520 demodulates the received signal based upon the modulation method of the communication system, thereby transmitting the demodulated signal. And, when the communication system decoder/encoder 670 outputs an encoded signal, the communicator 520 modulates the outputted signal based upon the modulation method of the communication system to which the signal is to be transmitted, thereby transmitted the modulated signal. For example, the communicator 520 outputs a signal allowing access to a service, which provides service guide information through an interactive channel based upon a command of the control unit 600. Thereafter, the communicator 520 may receive the service guide information transmitted by the corresponding server.

The control unit 600 may include a system decoder 610, a decoder 620, a service guide information controller 630, and a communication system decoder/encoder 670. The control unit 600 controls the operation of the function blocks shown in FIG. 12, such as the receiving unit, the input unit 530, the storage unit 550, and the display unit 560, and also processes control commands received from the user. When the broadcast receiver receives a signal through the broadcast channel, the system decoder 610 may decode the received signal based upon the coding method of the transmitting/receiving system. When the broadcast receiver 510 demodulates and outputs the broadcast signal, the system decoder 610 decodes the outputted signal, so as to acquire the service guide information. The system decoder 610 may decode the received signal based upon the coding method of the transmitting system. Herein, the corresponding signal is received by the receiving unit so as to enable the reception of the service guide information including the GroupingCriteria, shown in FIG. 4 to FIG. 7. The system decoder 610 will be described in detail with reference to FIG. 13.

The control unit 600 may include the communication system decoder/encoder 670 so that signals may be received and transmitted through the interactive channel. The communication system decoder/encoder 670 may either encode a signal that is to be transmitted through the interactive channel or decode a signal that is received from the communicator 520 through the interactive channel. For example, when the communicator 520 receives a signal including service guide information through the interactive channel, so as to demodulate the received signal and output the demodulated signal, the communication system decoder/encoder 670 may decode the outputted signal and output the service guide information to the service guide information controller 630 or the decoder 620. The service guide delivery descriptor (SGDD) corresponding to the service guide information, which is received by the communicator 520, may include the ProfileCriteria and the ParentalRatingCriteria of the service guide delivery unit, shown in FIG. 4 to FIG. 7.

The communication system decoder/encoder 670 may encode or decode IP datagram type signals. For example, the communication system decoder/encoder 670 receives a signal demodulated by the communicator 520. Then, the communication system decoder/encoder 670 may either decode the received signal to an IP datagram format and output the decoded signal, or encode the IP datagram format signal, thereby outputting the encoded signal to the communicator 520. More specifically, when the apparatus for processing service guide information receives service guide information through a broadcast channel, the communication system decoder/encoder 670 may encode a signal that allows access to a server, which provides the service guide information through an interactive channel. Herein, the service guide information is grouped based upon the GroupingCriteria shown in FIG. 4 to FIG. 7. Subsequently, the communicator 520 may decode the service guide information received from the accessed server based upon the communication system.

The decoder 620 may decode each of the video data, audio data, and data information decoded by the system decoder 610 and the communication system decoder/encoder 670, respectively. The decoder 620 may include a video decoder, an audio decoder, and a data decoder. For example, the video decoder may decode and output H.264 type video data, and the audio decoder may decode and output AC-3 type and/or AAC+ type audio data. Also, the decoder 620 may also include a data decoder (not shown) that can decode PSI/SI table format program information/service information. For example, the decoder 620 may decode signals based upon table information, such as a program associate table (PAT), a program map table (PMT), and a network information table (NIT), from the signal decoded by the system decoder 610. Alternatively, the decoder 620 may decode a broadcast signal based upon data broadcasting.

The decoder 620 may parse an IP/MAC notification table (INT), which is a table information, from the PMT. The INT includes mapping information between an IP address of an IP stream within the transport stream and a PID of the transport stream. When the decoder 620 parses the INT to acquire service guide entry information, the acquired service guide entry information may be outputted to the service guide information controller 630. Therefore, the apparatus for receiving service guide information may use the entry information to acquire service guide information through the broadcast channel or the interactive channel. In this case, exemplary contents of the service guide delivery descriptor parsed by the decoder 620 are shown in FIG. 5 to FIG. 7. For example, the service guide delivery descriptor (SGDD) received through the broadcast channel may include the PrafileCriteria and the ParentalRatingCriteria of the service guide delivery units.

The service guide information controller 630 receives service guide delivery descriptor decoded by the system decoder 610 or the communication system decoder/encoder 670. Then, the service guide information controller 630 uses the service guide delivery descriptor, so as to enable the apparatus for processing service guide information to receive service guide information. For example, the service guide information controller 630 may control the system decoder 610, so that the system decoder 610 can receive service guide information through the broadcast channel, based upon the service guide delivery descriptor received by the system decoder 610. Alternatively, the service guide information controller 630 may control the communication system decoder/encoder 670, so that the communication system decoder/encoder 670 can receive service guide information through the interactive channel. The process of receiving a service guide delivery descriptor through a broadcast channel or an interactive channel, which is performed by the apparatus for processing service guide information, has already been described with reference to FIG. 4 to FIG. 7. Furthermore, the communicator 520 may modulate a signal through the interactive channel and output the modulated signal, thereby receiving the service guide information from the corresponding server.

The service guide information controller 630 may include a controller 631, a channel map memory 633, and a browser driver 635. The controller 631 extracts channel map information from the service guide information and stores the extracted channel map information in the channel map memory 633. Additionally, the controller 631 controls a session and also controls the browser driver 635, which operates an application, thereby displaying the received or stored service guide information.

The apparatus for processing service guide information may store the received service guide information in the storage unit 550. The storage unit 550 may store service guide information, files transmitted as IP datagrams, and content data. The storage unit 550 may also store data prior to or after being decoded by the decoder 620. The input unit 530 receives a control command inputted by the user and may output the received control command to the control unit 600. The display unit 560 may output the audio or video signal outputted from the control unit 600. Furthermore, an application operated by the service guide information controller 630 may output the service guide information as image and sound through the display unit 560. Therefore, by using the application for the service guide information, the user may download files using the application for the service guide information or may be provided with web services or service guide information.

When the service guide information is acquired from a terminal that can receive DVB-H signals, the following process may be applied. When booting of the terminal is initiated, a list of transmission frequencies within the current network may be obtained from a network information table (NIT) among the multiplexing information included in the broadcast signal. When the terminal tunes a receiving frequency, a stream providing the broadcast service and mapping information of an IP flow may be acquired. The NIT includes identification information of each IP platform. Herein, each IP platform includes information identifying the packet, in which the INT is positioned, from the broadcast stream (in order to do so, reference may be made to PAT and PMT information). The INT provides information on an IP stream in the broadcast stream. Herein, the terminal acquires entry information of the service guide information from the IP stream, thereby obtaining the service guide delivery descriptor (SGDD).

When the terminal acquires a service guide delivery descriptor (SGDD), the terminal may acquire information describing the position of each service guide delivery unit, which corresponds to the transmission unit for the respective service guide information. At this point, the terminal may receive service guide delivery units grouped based upon at least one of the ProfileCriteria and the ParentalRatingCriteria among the GroupingCriteria of the service guide delivery descriptor (SGDD). Accordingly, the terminal may receive service guide delivery units, which are grouped based upon the ProfileCriteria, thereby quickly outputting the corresponding service. Alternatively, the terminal may receive service guide delivery units based upon the ParentalRatingCriteria, which corresponds to a viewing rating level applied to the terminal, thereby providing the received service guide information. When the service guide information is grouped in a descriptor entry level, the number of groups is smaller than the number of groups generated when grouping the service guide information in the fragment level. Therefore, the service guide information may be more easily and conveniently received/transmitted and managed.

Alternatively, when the service guide information is grouped in the fragment level, grouping may be performed in smaller units, and information on each grouped unit may be provided. Therefore, in the service guide delivery descriptor, the grouped service guide information may provide more detailed information.

FIG. 13 illustrates a detailed view of the system decoder 610. The system decoder 610 may decode the broadcast signal demodulated by the broadcast receiver 510 based upon the signal coding method. The system decoder 610 may process the service guide information demodulated by the broadcast receiver 510 as described below. The system decoder 610 includes an IP decapsulator 611, a user datagram protocol (UDP) decoder 612, an RTP decoder 613, a file delivery over unidirectional transport protocol (FLUTE) decoder 614, and an XML parser 617. The system decoder 610 may decode content data, which are being transmitted in real-time, using a decoding method respective of the system coding method. For example, the system decoder 610 may decode content data being transmitted in an IP datagram format and files including service guide information.

An example of the system decoder 610 decoding IP datagram format content data or service guide information will now be described in detail. Firstly, with respect to the content data, the IP decapsulator 611 refers to the header of the IP packet, so as to decapsulate the content data included in a payload of the IP packet. The UDP decoder 612 may decode content data, which are transmitted in real-time from the IP-decapsulated payload, based upon a user datagram protocol (UDP). The RTP decoder 613 may control the coding rate of the content data decoded by the UDP decoder 612 based upon an RTP control protocol (RTCP), so as to decode the decoded content data. The audio/video signal outputted from the RTP decoder 613 is respectively outputted to the decoder 620, which includes the audio decoder and the video decoder.

If the system decoder 610 decodes data on the file format service guide information, the data decoded by the UDP Decoder 612 are outputted to the FLUTE decoder 614. The FLUTE decoder 614 decodes FLUTE format data (IETF RFC3926), thereby outputting files, such as binary data, image data, and text. The data decoded and outputted from the FLUTE decoder 614 may include the service guide information. The XML parser 617 may decode an XML format file, which is outputted from the FLUTE decoder 614. In case the communication system decoder/encoder 670 decides the received signal and displays the service guide information, the communication system decoder/encoder 670 may decode the service guide information file (e.g., XML file), which is transmitted based upon a protocol, such as HTTP within the IP datagram.

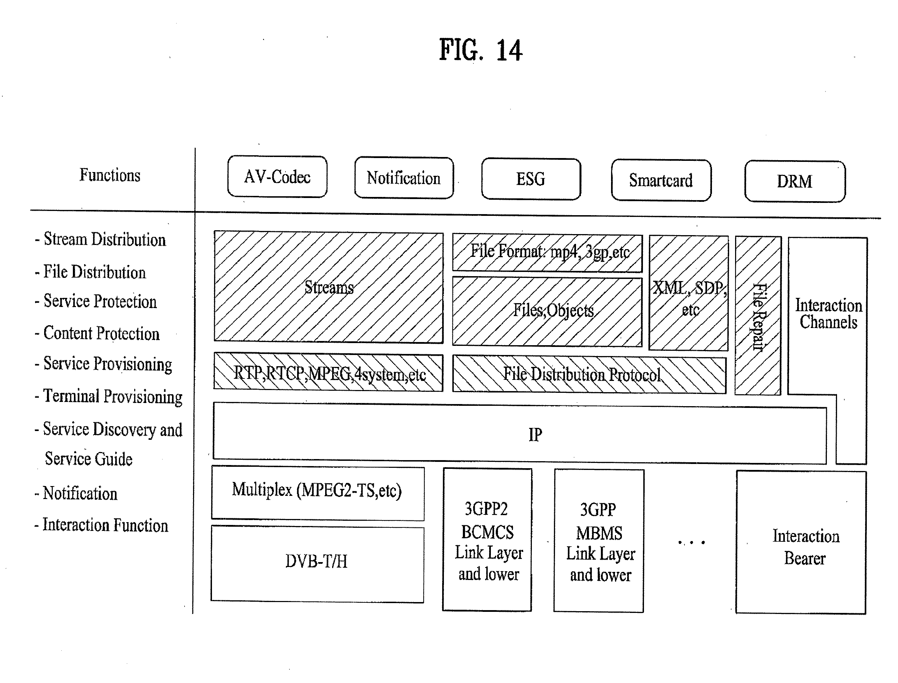

FIG. 14 illustrates an example of a protocol stack based upon which service guide information or service guide delivery descriptor is transmitted. The service guide information or service guide delivery descriptor may be received and transmitted via any bearer. For example, a delivery system may correspond to a digital video broadcasting-handheld/terrestrial (DVB-H/T) system, a 3^{rd} generation partnership project multimedia broadcast multicast service (3GPP MBMS) system, a 3GPP2 broadcast/multicast service (BCMCS) system, an IPTV system, and a DAB/DMB system.

When a file is transmitted through a broadcast channel, the transmission is generally based upon protocols, such as asynchronous layered coding (ALC) or file delivery over unidirectional transport (FLUTE). Alternatively, when the file is transmitted through an interactive channel, the transmission may be based upon protocols, such as HTTP, FLUTE, WAP, and so on. Furthermore, a stream transmission performed through one of a broadcast channel and an interactive channel may be based upon RTP. MPE or MPE-FEC type data or information based upon PSI/SI may be delivered to the stream. A streaming content based upon RTP may be decoded/encoded according to an H.264/AAC+ format. Meanwhile, the service guide information may be transmitted based upon an extensible markup language (XML) and a session description protocol (SDP). The XML corresponds to an object-oriented language. Accordingly, the service guide information may be transmitted by object units.

When the service guide information is transmitted in the DVB-H/T mode, the MPEG-2 TS maybe used as the data link layer. An IP protocol is generally used as the layer corresponding to a network layer. Nevertheless, voice services or text services of a communication system may be transmitted through the interactive channel. Streams, file format data or XML and SDP format data may be received and transmitted. And, by using the protocol shown in FIG. 14, the terminal may operate applications associated with audio/video data, service guide information, content protection, and so on.

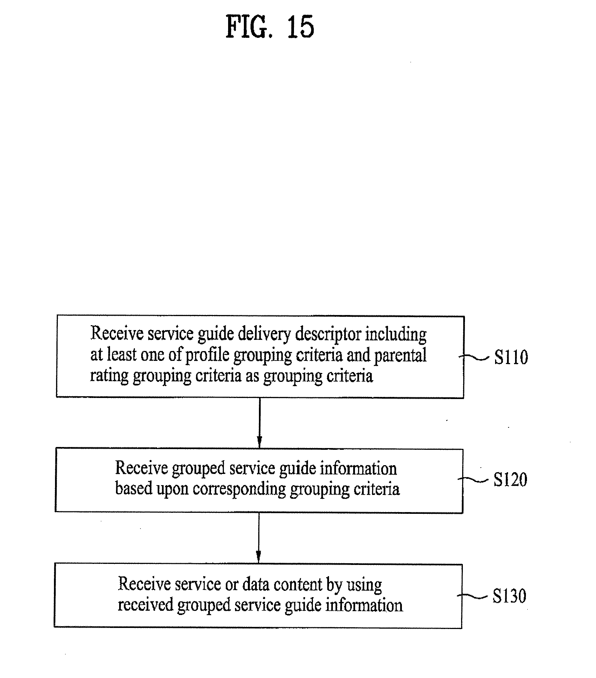

FIG. 15 illustrates a method for processing service guide information according to an embodiment of the present invention. The method for processing service guide information according to the present invention will now be described in detail with reference to FIG. 15. As described above, the service guide information may also be delivered by a bearer.

A service guide delivery information including at least one grouping criteria of a ProfileCriteria and a ParentalRatingCriteria among the GroupingCriteria is received (S110). The service guide information, which is grouped based upon the ProfileCriteria, is described in detail with reference to FIG. 4 and FIG. 6. And, the service guide information, which is grouped based upon the ParentalRatingCriteria, is described in detail with reference to FIG. 5 and FIG. 7. In the description of the present invention, the DVB-H system has been proposed as the example of receiving an entry information of the service guide information. Herein, the service guide delivery information may also be referred to as a service guide delivery descriptor.

The received service guide delivery information is decoded and the service guide information grouped according to the grouping criteria, is received (S120). The process of receiving service guide information from the service guide delivery descriptor has already been described in detail. For example, service guide delivery units may be grouped in a descriptor entry level or in a fragment level. The GroupingCriteria may be based upon at least one of the ProfileCriteria and the ParentalRatingCriteria of the service guide delivery descriptor (SGDD).

The received grouped service guide information may be used to receive a service or data content (S130). When receiving a service or content through the broadcast channel, the user may acquire channel information, in which the service selected from the service guide information and the content being provided by the selected service is transmitted, so as to receive the corresponding data content. When receiving a service or content through the interactive channel, the user may access a server, which provides the service or content from the service guide information, so as to acquire the corresponding service and data content.

As described above, the method and apparatus for processing service guide information according to the present invention have the following advantages. When the terminal receives service guide information, which is grouped by the ProfileCriteria, the terminal primarily receives the fragments of the service guide information that are required for outputting a requested service, thereby quickly providing the user-selected service to the user. Alternatively, when the terminal receives service guide information, which is grouped by the ParentalRatingCriteria, the terminal receives service guide information, which is grouped based upon a viewing rating level, thereby providing the service guide information corresponding to the viewing rating level predetermined in the corresponding terminal. Finally, since the terminal can selectively and efficiently receive the service guide information, excessive consumption of resources for receiving the service guide information may be reduced.

It will be apparent to those skilled in the art that various modifications and variations can be made in the present invention without departing from scope of the inventions. Thus, it is intended that the present invention covers the modifications and variations of this invention provided they come within the scope of the appended claims and their equivalents.

## Claims

1. A method for processing service guide information, comprising:
receiving (S110) a service guide delivery information including at least one grouping criteria of a profile grouping criteria and a parental rating grouping criteria;
decoding the received service guide information and receiving (S120) grouped service guide information based upon the grouping criteria; and
outputting (S130) data content by using the grouped service guide information,
wherein the profile grouping criteria corresponds to criteria information for grouping service guide information required for displaying an audio or video service of the service guide information, and wherein the parental rating grouping criteria corresponds to criteria information for grouping service guide information based upon viewing rating levels.

2. The method of claim 1, wherein the service guide information is grouped as a basic group and an advanced group, wherein the basic group groups the service guide information required for displaying a corresponding service based upon the profile grouping criteria, and wherein the advanced group groups the service guide information that provides a service including additional information.

3. The method of claim 2, wherein, among the service guide information, the basic group comprises at least any one of a service fragment, an access fragment, a sessiondescription fragment, a purchaseitem fragment, a purchasedata fragment, and a purchasechannel fragment.

4. The method of claim 2, wherein, among the service guide information, the advanced group comprises at least any one of a schedule fragment, a content fragment, a previewdata fragment, and an interactivitydata fragment.

5. The method of claim 1, wherein at least one of the grouping criteria, being the profile grouping criteria and the parental rating grouping criteria, is included in a descriptor level of the service guide delivery information.

6. The method of claim 1, wherein at least one of the grouping criteria, being the profile grouping criteria and the parental rating grouping criteria, is included in a fragment level of the service guide delivery information.

7. An apparatus for processing service guide information, comprising:
a receiving unit (510, 520) configured to receive a service guide delivery information including at least one grouping criteria of a profile grouping criteria and a parental rating grouping criteria, and receive service guide information grouped based upon the grouping criteria;
a system decoder (610, 620) configured to decode the received service guide delivery descriptor;
a service guide information controller (630) configured to control the grouped service guide information to be displayed, when the service guide information grouped based upon the corresponding grouping criteria is received; and
a display unit (640) configured to display the grouped service guide information,
wherein the profile grouping criteria corresponds to criteria information for grouping service guide information required for displaying an audio or video service of the service guide information, and wherein the parental rating grouping criteria corresponds to criteria information for grouping service guide information based upon viewing rating levels.

8. The apparatus of claim 7, wherein the service guide information is grouped as a basic group and an advanced group,
wherein the basic group groups the service guide information required for displaying a corresponding service based upon the profile grouping criteria, and wherein the advanced group groups the service guide information that provides a service including additional information.

9. The apparatus of claim 8, wherein, among the service guide information, the basic group comprises at least any one of a service fragment, an access fragment, a sessiondescription fragment, a purchaseitem fragment, a purchasedata fragment, and a purchasechannel fragment.

10. The apparatus of claim 8, wherein, among the service guide information, the advanced group comprises at least any one of a schedule fragment, a content fragment, a previewdata fragment, and an interactivitydata fragment.

11. The apparatus of claim 7, wherein at least one of the grouping criteria, being the profile grouping criteria and the parental rating grouping criteria, is included in a descriptor level of the service guide delivery information.

12. The apparatus of claim 7, wherein at least one of the grouping criteria, being the profile grouping criteria and the parental rating grouping criteria, is included in a fragment level of the service guide delivery information.

13. The apparatus of claim 7, wherein the system decoder (610) comprises:
an internet protocol (IP) decapsulator (611) configured to decapsulate an IP datagram including the service guide information;
a user datagram protocol (UDP) decoder (612) configured to decode the decapsulated data based upon the UDP;
a file delivery over unidirectional transport protocol (FLUTE) decoder (614) configured to decode the UDP-decoded data based upon the FLUTE; and
a parser (617) configured to parse the FLUTE-decoded data.
